# EUROPEAN PATENT APPLICATION

(11) **EP 4 553 123 A1**
(43) Date of publication of application: **14.05.2025**
(21) Application number: 24202035.2
(22) Date of filing: 23.09.2024
(51) Int. Cl.: C09J 7/35, C09J 123/08, C09J 191/06

(54) **WATER-BASED HOT-MELT ADHESIVE AND WATER-BASED HOT-MELT ADHESIVE COATED NON-WOVEN FABRIC**

(30) Priority: 09.11.2023 TW 112143275
(71) Applicant: BenQ Materials Corporation, Taoyuan City (TW)
(72) Inventor: CHEN, Ching-Huang, Taoyuan City (TW); CHUNG, Yu-Lun, Taoyuan City (TW); YU, Kuo-Hsuan, Taoyuan City (TW)
(74) Representative: Murgitroyd & Company

(57) **Abstract**

The present disclosure is to provide a water-based hot-melt adhesive for healthcare packaging. The water-based hot-melt adhesive includes: 10 wt% to 35 wt% of a water-based thermoplastic resin; 20 wt% to 45 wt% of wax particles and 40 wt% to 60 wt% of tackifier; wherein the tackifier including emulsion tackifier and particulate tackifier and the total amount of the particles in the water-based hot-melt adhesive is present at 40 wt% to 65 wt% based on the total weight of the water-based hot-melt adhesive. The coating layer formed on the healthcare packaging substrate from the water-based hot-melt adhesive of the present disclosure has great gas-permeability, and satisfied seal strength and peeling ability after sealing around with flexible sheets or blister containers.

## Description

### CROSS - REFERENCE TO RELATED APPLICATION

This application claims the benefit of Taiwanese patent application serial No. TW112143275, filed on November 9, 2023, the subject matters of which are incorporated herein by reference.

### BACKGROUND OF THE INVENTION

### Field of Invention

This disclosure relates to a water-based hot-melt adhesive for forming a hot-melt adhesive coating layer on a healthcare device packaging material for heat sealing and providing sufficient seal strength.

### Description of Related Art

Healthcare device packaging is used to provide a microbial barrier to keep the healthcare device in a sterilized environment after sterilization and before use. The healthcare devices are commonly sterilized after packaging, the sterilization can be steam sterilization, ethylene oxide (EO) sterilization or radiation sterilization. Different sterilization requires different packaging materials. For example, the packaging material for EO sterilization and steam sterilization has to provide gas-permeability to assure the steam and EO gas passing through the packaging material to reach the healthcare devices for sterilization. In the existing art, the commonly used materials which provide good microbial barrier effect and gas-permeability are medical paper or breathable polyethylene non-woven fabrics made by melt-blown method, such as DuPont Tyvek^{®}.

The healthcare device packaging material is processed by heat sealing, that is, to heat seal a breathable material, such as a medical paper or gas-permeable polyethylene film, with a plastic film or a blister pack at the peripheral edge thereof. In addition to gas-permeability, the medical packaging material is required to have sufficient heat seal strength and peelability. The insufficient heat seal strength of the material will cause the poor sealing of healthcare device packaging, which may result in the packaging broken due to high gas pressure in the sterilization. Also, excessive heat seal strength may make the packaging difficult to be peeled open or result in the occurrence of fiber tear to contaminate the healthcare devices when peeling open the packaging.

The medical gas-permeable materials, such as medical paper or breathable polyethylene films, are usually coated with heat-sealing adhesives layer to facilitate heat-seal packaging with various flexible sheets or plastic packaging trays.

The heat-sealing adhesives used in medical gas-permeable material is hot-melt adhesive. The conventional hot-melt adhesive is prepared by melting and blending thermoplastic resins, tackifiers, waxes, fillers, plasticizers, antioxidants and additives, and casting into the form of granule, strip, sheet or film for use and further, is applied by heat pressing or hot melting.

For example, CN108587521A describes an aqueous heat-seal adhesive for medical dialyzing paper, which is prepared by blending thermoplastic resin, resin tackifiers, waxes, emulsifiers and additives at 120°C to prepare a hot-melt adhesive coating liquid and the coating liquid is coated on medical paper or non-woven fabric to form a heat-seal layer for providing high seal strength. However, the adhesive is prepared under high temperature and the adhesive strength provided by the heat-seal layer of the healthcare packaging is too high, it may result in fiber tear when peeling open the packaging, which may contaminate the healthcare device. CN110591602A describes a paper lid for a medical packaging tray coated with a surface adhesive layer and a primer layer with different compositions, wherein the adhesion between the surface adhesive layer and the primer layer is less than the adhesion between the paper lid and the packaging tray to make the paper lid and packaging tray to be easily peeled apart without damaging the paper lid. However, the two coating layers on the paper lid increases the manufacture inconvenience. Furthermore, CN108441149A describes a two-step process for preparing a hot-melt adhesive used as a heat seal layer on the medical packaging material. The preparation process includes of mixing and blending thermoplastic resin, resin tackifiers and waxes at a temperature higher than 160°C to form hot-melt powders, and then the powders emulsified and dispersed in polyacrylic acid emulsion to prepare a coating liquid. The two-step preparation process increases the manufacture complication.

The present disclosure is to provide a water-based hot-melt adhesive for forming a coating layer on healthcare packaging materials to provide sufficient gas-permeability, reliable seal strength and peelability after being heat sealed with a flexible sheet material or a blister container at the peripheral edges thereof.

### SUMMARY OF THE INVENTION

The present disclosure is to provide a water-based hot-melt adhesive for healthcare packaging, which can form a coating layer on a medical polyolefin spunbonded nonwoven fabric for heat sealing with flexible sheets or blister packs at the peripheral edges thereof while maintaining sufficient gas-permeability for steam sterilization or ethylene oxide (EO) sterilization and seal stability and provide sufficient reliable seal strength and peelability. Furthermore, the water-based hot-melt adhesive of the present disclosure can be prepared without blending step as required for preparing the conventional hot-melt adhesive, but provide sufficient seal strength and gas-permeability for the healthcare packaging after application.

The disclosed water-based hot-melt adhesive includes 10 weight percent (wt%) to 35 wt% of water-based thermoplastic resin, 20 wt% to 45 wt% of wax particles and 40 wt% to 60 wt% of tackifier, wherein the tackifier includes emulsion tackifier and particulate tackifier, wherein the total amount of the particles in the water-based hot-melt adhesive is 40 wt% to 65 wt% based on the total weight of the water-based hot-melt adhesive.

The disclosed water-based hot-melt adhesive preferably includes 13 wt% to 30 wt% of water-based thermoplastic resin, 22 wt% to 40 wt% of wax particles and 40 wt% to 55 wt% of tackifier, wherein the tackifier includes emulsion tackifier and particulate tackifier, wherein the total amount of the particles in the water-based hot-melt adhesive is 41 wt% to 61 wt% based on the total weight of the water-based hot-melt adhesive.

In the disclosed water-based hot-melt adhesive, the wax particles are in an amount of 40 wt% to 75 wt% based on the total weight of the particles and preferably is in an amount of 45 wt% to 70 wt%, and the particulate tackifier is in an amount of 25 wt% to 60 wt% based on the total weight of the particles and preferably is 30 wt% to 55 wt%.

The glass transition temperature of the water-based hot-melt adhesive of the present disclosure is between 0°C to -80°C.

In the disclosed water-based hot-melt adhesive, the particle size (D50) of the wax particles can be in the range of 3 µm to 50 µm and preferably in the range of 5 µm to 25 µm.

In the disclosed water-based hot-melt adhesive, the glass transition temperature (Tg) of the wax particles is less than 0°C and the melting point thereof is between 70°C to 180°C. In the disclosed water-based hot-melt adhesive, the wax particles can be Fischer-Tropsch synthetic wax particles, polypropylene wax particles, polyethylene wax particles, oxidized polyethylene wax particles, microcrystalline wax or the combinations thereof.

In the disclosed water-based hot-melt adhesive, the tackifier includes emulsion tackifier and particulate tackifier, wherein the emulsion tackifier can be, for example, petroleum resin emulsion, rosin ester emulsion and the derivatives thereof, terpene resin and the modified resin derivatives thereof, thermoplastic phenol-formaldehyde resin emulsion, low-molecular polystyrene emulsion, vinyl acrylate copolymer emulsion or the combinations thereof; and the particulate tackifier can be, for example, C5 petroleum resin micropowders, C9 petroleum resin micropowders, C5/C9 copolymerized petroleum resin micropowders, hydrogenated C9 petroleum resin micropowders or the combinations thereof.

In an embodiment of the disclosed water-based hot-melt adhesive, the particulate tackifier is present in an amount of 20 wt% to 65 wt% based on the total amount of the tackifier and preferably is in an amount of 25 wt% to 60 wt%, and includes one or more particulate tackifiers.

In the disclosed water-based hot-melt adhesive, the particle size (D50) of the particulate tackifier is between 3 µm to 50 µm and preferably is between 5 µm to 45 µm.

In an embodiment of the disclosed water-based hot-melt adhesive, the emulsion tackifier is present in an amount of 35 wt% to 80 wt% based on the total amount of the tackifier and preferably is in an amount of 40 wt% to 75 wt%, and includes one or more emulsion tackifiers.

In the disclosed water-based hot-melt adhesive, the glass transition temperature (Tg) of the water-based thermoplastic resin is less than 0°C and the melting point thereof is between 150°C to 300°C. In the disclosed water-based hot-melt adhesive, the water-based thermoplastic resin can be thermoplastic polymer, for example, ethylene-vinyl acetate, styrene-butadiene-rubber, styrene-butadiene-styrene block copolymer, styrene-acrylic acid copolymer, ethylene acrylic resin, polyacrylic resin or the combinations thereof. In an embodiment of the disclosed water-based hot-melt adhesive, the water-based thermoplastic resin can use one or more water-based thermoplastic resins.

In another aspect, the present disclosure is to provide a water-based hot-melt adhesive coated nonwoven fabric including a polyolefin spunbonded nonwoven fabric substrate and a water-based hot-melt adhesive coating layer formed on at least one side of the polyolefin spunbonded nonwoven fabric. The gas-permeability of water-based hot-melt adhesive coated nonwoven fabric is less than 120 second and the seal strength thereof is more than 220 g/15 mm.

In the disclosed water-based hot-melt adhesive coated nonwoven fabric, the coating amount of the water-based hot-melt adhesive on the polyolefin spunbonded nonwoven fabric substrate is between 8 g/m² to 20 g/m².

The above and other aspects of the disclosure will become better understood with regard to the following detailed description of the preferred but nonlimiting embodiment(s). These and other aspects of the disclosure will become apparent from the following description of the presently preferred embodiments. The detailed description is merely illustrative of the disclosure and does not limit the scope of the disclosure, which is defined by the appended claims and equivalents thereof. As would be obvious to one skilled in the art, many variations and modifications of the disclosure may be affected without departing from the spirit and scope of the novel concepts of the disclosure.

### BRIEF DESCRIPTION OF THE INVENTION

Fig. 1 is a scanning electron microscope (SEM) image of the water-based hot-melt adhesive coated nonwoven fabric of Example 10 at 500 magnifications;
Fig. 2 is a scanning electron microscope (SEM) image of the cross-section of the HDPE film after layer-peeling test of the water-based hot-melt adhesive coated nonwoven fabric of Example 10 at 500 magnifications; and
Fig. 3 is a scanning electron microscope (SEM) image of the non-woven fabric after layer-peeling test of the water-based hot-melt adhesive coated nonwoven fabric of Example 10 at 500 magnifications.

### DETAILED DESCRIPTION OF THE INVENTION

The detailed description provided below in connection with the appended drawings is intended as a description of the present examples and is not intended to represent the only forms in which the present example may be constructed or utilized. The description sets forth the functions of the example and the sequence of steps for constructing and operating the example. However, the same or equivalent functions and sequences may be accomplished by different examples.

In the following description, numerous specific details are described in detail in order to enable the reader to fully understand the following examples. However, embodiments of the present disclosure may be practiced in case no such specific details.

Unless defined otherwise, all technical and scientific terms used herein have the same meaning as commonly understood by one of ordinary skill in the art to which this disclosure belongs. Generally, the nomenclature used herein and the laboratory procedures are well known and commonly employed in the art. Conventional methods are used for these procedures, such as those provided in the art and various general references. Where a term is provided in the singular, the inventors also contemplate the plural of that term. The nomenclature used herein and the laboratory procedures described below are those well-known and commonly employed in the art.

The disclosed water-based hot-melt adhesive includes 10 wt% to 35 wt% of water-based thermoplastic resin, 20 wt% to 45 wt% of wax particles and 40 wt% to 60 wt% of tackifier, wherein the tackifier includes emulsion tackifier and particulate tackifier and the total amount of the particles is present at 40 wt% to 65 wt% based on the total weight of the water-based hot-melt adhesive.

The disclosed water-based hot-melt adhesive can be coated on the surface of a polyolefin spunbonded nonwoven fabric after adding water as solvent and being dried at elevated temperature to obtain a water-based hot-melt adhesive coated nonwoven fabric. The prepared water-based hot-melt adhesive coated nonwoven fabric can provide sufficient gas-permeability after heat sealing with a flexible sheet or a blister container at the peripheral edges thereof while maintaining sufficient gas-permeability for steam sterilization or ethylene oxide (EO) sterilization. Furthermore, the disclosed water-based hot-melt adhesive provide reliable heat sealing and peelability to meet the heat seal strength required by the healthcare packaging, when peeling open the healthcare packaging, the packaging will be opened at the seal area by cleanly splitting the water-based hot-melt adhesive layer to maintain the seal stability and reduce the incident of fiber tear contamination.

The high total amount of particles in the disclosed water-based hot-melt adhesive is for forming voids in the coating layer of the water-based hot-melt adhesive on the medical polyolefin spunbonded nonwoven fabric but maintains the desired seal strength provided by the adhesive layer and the adhesion to the non-woven fabric. If the amount of the particles is less, the gas-permeability of the adhesive coating layer will be insufficient. If the amount of the particles is higher, the seal strength of the adhesive coating layer will be low.

The disclosed water-based hot-melt adhesive is prepared by adding wax particles and particulate tackifier into the water-based thermoplastic resin (Tg<0°C) and emulsion tackifier, adding water as solvent to mix and disperse thoroughly to obtain a coating solution for subsequent coating process, wherein the solvent can be removed by heating. The disclosed water-based hot-melt adhesive can be prepared without conventional blending process, and can be directly applied a heat-seal process to obtain the desired seal strength and gas-permeability after applying to the substrate.

In an embodiment of the disclosed water-based hot-melt adhesive, the water-based hot-melt adhesive preferably includes 13 wt% to 30 wt% of water-based thermoplastic resin, 22 wt% to 40 wt% of wax particles and 40 wt% to 55 wt% of tackifier, wherein the tackifier includes emulsion tackifier and particulate tackifier, and wherein the total amount of the particles in the water-based hot-melt adhesive is 41 wt% to 61 wt% based on the total weight of the water-based hot-melt adhesive.

The glass transition temperature (Tg) of the water-based thermoplastic resin used in the disclosed water-based hot-melt adhesive is less than 0°C and the melting point thereof is between 150°C to 300°C. In an embodiment of the present disclosure, the water-based hot-melt adhesive can use one or more water-based thermoplastic resins. The water-based thermoplastic resin used in the disclosed water-based hot-melt adhesive can be, for example, ethylene-vinyl acetate, styrene-butadiene-rubber, styrene-butadiene-styrene block copolymer, styrene-acrylic acid copolymer, ethylene acrylic resin, polyacrylic resin or the combinations thereof, but not limited thereto.

The water-based thermoplastic resin suitably used in the disclosed water-based hot-melt adhesive can be commercial products, such as, ethylene-vinyl acetate (EVA) exemplified by EAF 68 commercially obtained from Wacker Chemical Corporation; styrene-butadiene-rubber (SBR) exemplified by SB2108, LPF5356, LPF7814, LPF7833 commercially obtained from Goodyear Chemical Co. US, DL326PA commercially obtained from Trinseo LLC, US; styrene-butadiene-styrene (SBS) block copolymer exemplified by WB-24 commercially obtained from Yuan Hong Corp. Taiwan; polyacrylic resin exemplified by Carbotac^{™} 1822, Carbotac^{™} 1814 commercially obtained from Lubrizol Corp., US; styrene-acrylic acid copolymer exemplified by Carboset^{®} GA-7428 commercially obtained from Lubrizol Corp., US; but not limited thereto.

The wax particles used in the disclosed water-based hot-melt adhesive are to decrease the melt viscosity and surface tackiness of the water-based hot-melt adhesive and adjust the fluidity and wettability but not significantly to decrease the adhesion of the water-based hot-melt adhesive. In the disclosed water-based hot-melt adhesive, the wax particle is present between 20 wt% to 45 wt%, and preferably is between 22 wt% to 40 wt%. Furthermore, for enhancing the gas-permeability of the disclosed water-based hot-melt adhesive coating layer on the polyolefin spunbonded nonwoven fabric substrate, the particle size (D50) of the wax particles can be in the range of 3 µm to 50 µm and preferably is in the range of 5 µm to 25 µm.

The wax particles suitably used in the disclosed water-based hot-melt adhesive has a glass transition temperature (Tg) less than 0°C and a melting point between 70°C to 180°C. The suitable wax particles can be commercially obtained, such as Fischer-Tropsch synthetic wax particles, polypropylene wax particles, polyethylene wax particles, oxidized polyethylene wax particles, microcrystalline wax or the combination thereof, but not limited thereto. Suitable polypropylene wax particles can be commercial products, such as, CERAFLOUR^{®} 913 and CERAFLOUR^{®} 914 commercially obtained from BYK-Chemie GmbH, Germany, or CERETAN^{®} MP2120 commercially obtained from Münzing Chemie GmbH, Germany. Suitable polyethylene wax particles can be, such as, CERAFLOUR^{®} 925, CERAFLOUR^{®} 929N commercially obtained from BYK-Chemie GmbH, Germany, CERETAN^{®} MO4715 commercially obtained from Münzing Chemie GmbH, Germany. Suitable Fischer-Tropsch synthetic wax particles can be, for example, Sasolwax Spray 30-G, Spray 30G-M, Spray 30G-EF, Spray 105, Spray 105-G, Spray 105G-EF, Sasolwax Aqua 30-G, Aqua 30G-EF commercially obtained from Sasol Ltd., South Africa, but not limited thereto.

The tackifier used in the disclosed water-based hot-melt adhesive is for decreasing the melt viscosity of the water-based hot-melt adhesive, increasing the wettability and initial adhesion to the adherent and adjusting the heat resistance temperature of the hot-melt adhesive. The tackifier suitably used in the disclosed water-based hot-melt adhesive has a glass transition temperature (Tg) greater than 0°C and the melting point between 70°C to160°C.

The tackifier used in the disclosed water-based hot-melt adhesive includes emulsion tackifier and particulate tackifier. The particulate tackifier is together with the wax particles to obtain a high particle content in the water-based hot-melt adhesive in order for the water-based hot-melt adhesive to facilitate the formation of voids when coating on a polyolefin spunbonded nonwoven fabric substrate but providing desired seal strength and sufficient adhesion with the nonwoven fabric substrate.

The amount of the emulsion tackifier and the particulate tackifier in the disclosed water-based hot-melt adhesive can be adjusted in accordance with the amount of the wax particles and total particle amount in the disclosed water-based hot-melt adhesive. In an embodiment of the disclosed water-based hot-melt adhesive, the wax particles are present in an amount of 40 wt% to 75 wt% and the particulate tackifier is present in an amount of 25 wt% to 60 wt% based on the total particle amount in the water-based hot-melt adhesive. In another embodiment of the disclosed water-based hot-melt adhesive, the wax particles are present in an amount of 45 wt% to 70 wt% and the particulate tackifier is present in an amount of 30 wt% to 55 wt% based on the total particle amount in the water-based hot-melt adhesive. If the amount of the wax particles is less, the adhesive coating layer cannot be evenly split. If the amount of the wax particles is excess, the seal strength of the adhesive coating layer is insufficient.

In the disclosed water-based hot-melt adhesive, the particle size (D50) of the particulate tackifier is between 3 µm to 50 µm and preferably is between 5 µm to 45 µm. In an embodiment of the present disclosure, the water-based hot-melt adhesive can use one or more particulate tackifiers. The particulate tackifier suitably used in the disclosed water-based hot-melt adhesive can be petroleum resin micropowders or hydrogenated petroleum resin micropowders, for example, C5 petroleum resin micropowders, C9 petroleum resin micropowders, C5/C9 copolymerized petroleum resin micropowders, hydrogenated C9 petroleum resin micropowders or the combinations thereof, for example, the commercial products, Wingtack^{®} 95, Wingtack^{®} 98, Wingtack^{®} STS, Wingtack^{®} Extra, Cleartack^{®} W-90, Cleartack^{®} W-110, Cleartack^{®} W-120 and Cleartack^{®} W-140 sold by Cray Valley Ltd., US; the commercial products, Regalite^{™} R1090 and Regalite^{™} R1125 sold by Synthomer Co., UK; the commercial products, YL-90 and YL-120 sold by Yuen Liang Ind. & Co., Ltd., Taiwan, but not limited thereto.

The emulsion tackifier used in the disclosed water-based hot-melt adhesive can enhance the compatibility and coatability. In an embodiment of the present disclosure, the water-based hot-melt adhesive can use one or more emulsion tackifiers. The emulsion tackifier suitably used in the disclosed water-based hot-melt adhesive can be such as petroleum resin emulsion, rosin ester emulsion and the derivatives there of, terpene resin and the modified resin derivatives thereof, thermoplastic phenol-formaldehyde resin emulsion, low-molecular polystyrene emulsion, vinyl acrylate copolymer emulsion or the combinations thereof. Suitable petroleum resin emulsion can be, such as aliphatic hydrocarbon resin emulsion, alicyclic hydrocarbon resin emulsion, aromatic hydrocarbon resin emulsion, aliphatic/aromatic copolymer resin emulsion, for example, C5 aliphatic hydrocarbon resin emulsion, C9 aromatic hydrocarbon resin emulsion, C5/C9 aliphatic/aromatic copolymer resin emulsion, hydrogenated petroleum resin emulsion. Suitable rosin ester emulsion and the derivatives thereof can be gum rosin emulsion, wood rosin emulsion, and tall oil rosin and the derivatives emulsion thereof. Suitable terpene resin and the modified resin derivatives can be such as polyterpene resin emulsion, hydrogenated terpene resin emulsion, styrenated terpene resin emulsion, terpene-phenolic resin emulsion. In an embodiment of the present disclosure, the water-based emulsion tackifiers can be the combinations of the above-mentioned emulsion tackifiers. In another embodiment of the present disclosure, the water-based hot-melt adhesive can use one or more water-based emulsion tackifiers.

Furthermore, the disclosed water-based hot-melt adhesive is for coating on a polyolefin spunbonded nonwoven fabric substrate to form a water-based hot-melt adhesive coating layer thereon. If the water-based hot-melt adhesive includes excessive amount of emulsion tackifier, the water-based hot-melt adhesive coating layer may penetrate into the non-woven fabric to affect the gas-permeability thereof. In an embodiment of the disclosed water-based hot-melt adhesive, the emulsion tackifier is present in an amount of 35 wt% to 80 wt% based on the total amount of the tackifier and preferably is in an amount of 40 wt% to 75 wt%, and the water-based hot-melt adhesive can use one or more emulsion tackifier.

The emulsion tackifier suitably used in the present disclosure can be commercially obtained, such as, rosin ester emulsion Dermulsene^{®} RE802, aqueous rosin acid emulsion Dermulsene^{®} RA702, terpene phenolic resin dispersion Dermulsene^{®} TR602 and C5 resin emulsion Dermulsene^{®} DP1124 obtained from DRT (Les Dérivés Résiniques et Terpénique), France; water-based rosin ester emulsion SUPER ESTER E720W obtained from Arakawa Chemical, Japan; ethylene acrylic acid copolymer dispersion Michem^{®} Prime 4983R, Michem^{®} Prime 4990R, Michem^{®} Prime 4983-40R obtained from commercially obtained from Michelman, Inc. US; an ethylene-acrylic acid copolymer wax emulsion Aquacer 1061 commercially obtained from BYK-Chemie GmbH, Germany; rosin ester emulsion Addtack^{™} 880L, commercially obtained from West Tech Chemical Co., Ltd, China, but not limited thereto.

The disclosed water-based hot-melt adhesive can further includes additives, such as wetting dispersing agent, defoaming agent, and thickeners to enhance the coating process ability of the water-based hot-melt adhesive; antioxidants, UV stabilizers, antibacterial agents, antistatic agents to increase the functionality of water-based hot-melt adhesives. The types and amounts of the additives can be properly selected by person skilled in the related art in accordance with the practical requirements of the hot-melt sealing film.

Moreover, the disclosed water-based hot-melt adhesive is prepared by adding wax particles, particulate tackifier, water as solvent into the mixed water-based thermoplastic resin and emulsion tackifier, mixing and dispersing thoroughly to obtain a coating solution for subsequent coating process. The disclosed water-based hot-melt adhesive can be prepared without conventional blending process, and can obtain the desired seal strength and gas-permeability after applying to the substrate.

In another aspect, the present disclosure is to provide a water-based hot-melt adhesive coated nonwoven fabric which includes a polyolefin spunbonded nonwoven fabric and a water-based hot-melt adhesive described above coated on at least one surface of the polyolefin spunbonded nonwoven fabric. The gas-permeability of the disclosed water-based hot-melt adhesive coated nonwoven fabric is less than 120 seconds (TAPPI (Technical Association of the Pulp and Paper industry) T-460), and the seal strength is more than 220 g/15 mm (ASTM (American Society for Testing and Materials) F-88).

As used herein, the "seal strength" refers to the peel strength required to separate two sealed flexible sheet material, the strength is measured according to ASTM F88 in a "T-peel" configuration at an elongation speed of 200 mm/min.

As used herein, the "gas-permeability"refers to the air resistance of gas passing through a gas-permeable sheet material. According to the TAPPI T-460, it measures the time required for 100 cubic centimeters of air passing through a 1 inch square of sample at a pressure difference of approximately 1.22 kPa.

The suitable polyolefin spunbonded nonwoven fabric for the disclosed gas-permeable hot-melt sealing film can be the nonwoven fabric commonly used in the healthcare packaging, DuPont Tyvek^{®} with a density of 40 g/m² to 80 g/m², such as Tyvek^{®} 1073B, Tyvek^{®} 1059B, Tyvek^{®} 2FS and the like, but not limited thereto.

The disclosed water-based hot-melt adhesive can be coated on polyolefin spunbonded nonwoven fabric to make a water-based hot-melt adhesive coated nonwoven fabric. The water-based hot-melt adhesive can be coated evenly over all the surface of the polyolefin spunbonded nonwoven fabric or partially at specific area thereof, and the coating amount is in the range of 8 g/m² to 20 g/m², and preferably is in the range of 12g/m² to 18g/m².

The packaging materials suitably sealed with the disclosed water-based hot-melt adhesive coated nonwoven fabric can be films or blister containers made from, for example, PET (polyethylene terephthalate), PETG (polyethylene terephthalate glycol), PVC (polyvinyl chloride), APET (amorphous polyethylene terephthalate), PS (polystyrene), PP (polypropylene), PC (polycarbonate), PE (polyethylene), nylon, but not limited thereto.

The disclosed water-based hot-melt adhesive coated nonwoven fabric can be heat sealed with a packaging material as described above at the temperature of 90°C to 150°C. The seal strength of the sealed packaging is more than 220 g/15 mm and preferably, is more than 250 g/15 mm.

The prepare method of the disclosed water-based hot-melt adhesive coated nonwoven fabric includes adding wax particles, particulate tackifier and water as solvent into the water-base polyolefin resin, mixing and stirring evenly to form a water-based hot-melt adhesive emulsion. The prepared water-based hot-melt adhesive emulsion is coated on a polyolefin spunbonded nonwoven fabric substrate and dried at the temperature of 60°C to 100°C to evaporate the solvent to form a water-based hot-melt adhesive coated nonwoven fabric. The water-based hot-melt adhesive can be coated by the coating processes commonly used in this technical field, for example, roll coating process, blade coating process, roller coating process, spin coating process, spray coating process, slot-die coating process or air knife coating process, but not limited thereto.

The disclosed water-based hot-melt adhesive coated nonwoven fabric can be heat sealed with flexible sheets or blister containers at the peripheral edges to prepare a healthcare device packaging with sufficient gas-permeability for steam sterilization or ethylene oxide (EO) sterilization and providing sufficient reliable seal strength and peelability. When peeling apart the heat sealing area to open the healthcare packaging, the water-based hot-melt adhesive layer is cleanly split to reduce the fiber tear occurred at the non-woven fabric, which may cause contamination to the healthcare devices.

The present disclosure will be explained in further detail with reference to the examples. However, the present disclosure is not limited to these examples.

### Example.

The materials used in the Example were as below:
SB 2108: styrene-butadiene-rubber latex, melting point 185.7°C, glass transition temperature (Tg) about -49.9°C, solid content 40.5%, solvent: water, commercially obtained from Goodyear Chemical, Co. US
DL 326PA: styrene-butadiene-rubber latex, melting point 230.9°C, glass transition temperature (Tg) about -42.1°C, solid content 50%, solvent: water, commercially obtained from Trinseo LLC, US;
Carbotac^{®} 1822: polyacrylic latex, melting point 212.9°C, glass transition temperature (Tg) about -43°C, solid content 52.5%, solvent: water, commercially obtained from Lubrizol Corp., US;
VINNAPAS^{®} EAF-68: ethylene-vinyl acetate-acrylate copolymer dispersion, melting point 240°C, glass transition temperature (Tg) - 35°C, solid content 59.5%, solvent: water, commercially obtained from Wacker Chemie AG, Germany.
WB-24: styrene-butadiene-styrene block copolymer latex, melting point 240°C, glass transition temperature (Tg) about -41.7°C, solid content 50%, solvent: water, commercially obtained from Yuan Hong Corp. Taiwan;
Michem^{®} Prime 4983-40R: ethylene acrylic acid copolymer dispersion, melting point 140°C, glass transition temperature (Tg) 6.2°C, solid content 40%, solvent: water, commercially obtained from Michelman, Inc. US.
Dermulsene^{®} RE802: rosin glyceride emulsion, softening point 70°C, glass transition temperature (Tg) 17.9°C, solid content 52%, solvent: water, commercially obtained from DRT, France.
Addtack^{™} 880 L: rosin ester emulsion, softening point between 75 °Cto 85°C, glass transition temperature (Tg) 33.4°C, solid content 55%, solvent: water, commercially obtained from West Tech Chemical Co., Ltd, China.
Sasolwax Spray 30G-M: Fischer-Tropsch fine micronized wax powder, melting point 96°C to 100°C, glass transition temperature (Tg) about -120°C, average particle size 9 µm to 11 µm, commercially obtained from Sasol Limited, South Africa;
Ceraflour 914: micronized polypropylene wax, melting point 160°C, glass transition temperature (Tg) about -20°C, average particle size 24 µm, commercially obtained from BYK-Chemie GmbH, Germany;
Cleartack^{®} W-140: C9 petroleum resin micropowders, soft point 140°C, glass transition temperature (Tg) 90°C, number-average molecular weight (Mn) 1200 g/mol, average particle size 5 µm to 10 µm, commercially obtained from Cray Valley Ltd, US;
Cleartack^{®} W-140(B): C9 petroleum resin micropowders, softening point 140°C, glass transition temperature (Tg) 90°C, number-average molecular weight (Mn) 1200 g/mol, average particle size 30 µm to 40 µm, commercially obtained from Cray Valley Ltd, US;
Cleartack^{®} W-120: C9 petroleum resin micropowders, softening point 120 °C, glass transition temperature (Tg) 70°C, number-average molecular weight (Mn) 950 g/mol, average particle size 10 µm to 20 µm, commercially obtained from Cray Valley Ltd, US;
Cleartack^{®} W-90: C9 petroleum resin micropowders, softening point 90 °C, glass transition temperature (Tg) 40°C, number-average molecular weight (Mn) 650 g/mol, average particle size 30 µm to 40µm, commercially obtained from Cray Valley Ltd, US;
Wingtack^{®} 95: C5 petroleum resin micropowders, softening point 98 °C, glass transition temperature (Tg) 55°C, number-average molecular weight (Mn) 1100 g/mol, average particle size 30 µm to 40µm, commercially obtained from Cray Valley Ltd, US;
Wingtack^{®} Extra: C5/C9 petroleum resin micropowders, softening point 97 °C, glass transition temperature (Tg) 52°C, number-average molecular weight (Mn) 1100 g/mol, average particle size 30 µm to 40µm, commercially obtained from Cray Valley Ltd, US;
YL-90: C9 petroleum resin micropowders, softening point 100°C, glass transition temperature (Tg) 50°C, number-average molecular weight (Mn) 750 g/mol, average particle size 30 µm to 40 µm, commercially obtained from Yuen Liang Ind. & Co., Ltd., Taiwan.
BYK-3450: polyether-modified siloxane-based surfactant, commercially obtained from BYK-Chemie GmbH, Germany;
TEGO^{®} Wet 240: siloxane-based substrate wetting additive, commercially obtained from Evonik Industries GmbH, Germany;
BYK-025: silicone-based defoamer, solid content 18.5%, solvent: dipropylene glycol monomethyl ether, commercially obtained from BYK-Chemie GmbH, Germany;
Tyvek^{®} 2FS: high density polyethylene spunbonded nonwoven fabric substrate, commercially obtained from DuPont de Nemours, Inc., US.

### Example 1.

7.5 weight parts of styrene-butadiene-rubber latex (SB 2108), 5.6 weight parts of ethylene acrylic acid copolymer dispersion (Michem^{®} Prime 4983-40R), 1.5 weight parts of rosin glyceride emulsion (Dermulsene^{®} RE 802), 3.75 weight parts of Fischer-Tropsch synthetic wax particles (Sasolwax Spray 30G-M), 3.75 weight parts of C9 petroleum resin micropowders (Cleartack^{®} W-140 (B)), 0.04 weight parts of surfactant (BYK-3450), 44.8 weight parts of deionized water and 0.8 weight parts of ethanol were mixed and stirred for 1 hour for evenly dispersion to prepare a water-based hot-melt adhesive solution.

The obtained water-based hot-melt adhesive solution was coated on a high-density polyethylene spunbonded nonwoven fabric substrate Tyvek^{®} 2FS and dried to form a 13.2 g/m² water-based hot-melt adhesive coating layer on the high-density polyethylene spunbonded nonwoven fabric substrate to prepare a water-based hot-melt adhesive coated nonwoven fabric.

The gas-permeability, heat seal strength and layer-peeling of the obtained water-based hot-melt adhesive coated nonwoven fabric were evaluated by the evaluation methods described hereinafter. The results were shown in Table 1.

### Example 2.

7.5 weight parts of styrene-butadiene-rubber latex (SB 2108), 5.6 weight parts of ethylene acrylic acid copolymer dispersion (Michem^{®} Prime 4983-40R), 1.5 weight parts of rosin glyceride emulsion (Dermulsene^{®} RE 802), 5.625 weight parts of Fischer-Tropsch synthetic wax particles (Sasolwax Spray 30G-M), 3.75 weight parts of C9 petroleum resin micropowders (Cleartack^{®} W-120), 0.04 weight parts of surfactant (BYK-3450), 0.04 weight parts of defoamer (BYK-025), 41.6 weight parts of deionized water and 4 weight parts of ethanol were mixed and stirred for 1 hour for evenly dispersion to prepare a water-based hot-melt adhesive solution.

The obtained water-based hot-melt adhesive solution was coated on a high-density polyethylene spunbonded nonwoven fabric substrate Tyvek^{®} 2FS and dried to form a 12.5 g/m² water-based hot-melt adhesive coating layer on the high-density polyethylene spunbonded nonwoven fabric substrate to prepare a water-based hot-melt adhesive coated nonwoven fabric.

The gas-permeability, heat seal strength and layer-peeling of the obtained water-based hot-melt adhesive coated nonwoven fabric were evaluated by the evaluation methods described hereinafter. The results were shown in Table 1.

### Example 3.

7.5 weight parts of styrene-butadiene-rubber latex (SB 2108), 5.6 weight parts of ethylene acrylic acid copolymer dispersion (Michem^{®} Prime 4983-40R), 1.5 weight parts of rosin glyceride emulsion (Dermulsene^{®} RE 802), 3.75 weight parts of polypropylene wax particles (Ceraflour 914), 3.75 weight parts of C9 petroleum resin micropowders (Cleartack^{®} W-90), 0.04 weight parts of surfactant (BYK-3450) and 24.8 weight parts of deionized water were mixed and stirred for 1 hour for evenly dispersion to prepare a water-based hot-melt adhesive solution.

The obtained water-based hot-melt adhesive solution was coated on a high-density polyethylene spunbonded nonwoven fabric substrate Tyvek^{®} 2FS and dried to form a 13.1 g/m² water-based hot-melt adhesive coating layer on the high-density polyethylene spunbonded nonwoven fabric substrate to prepare a water-based hot-melt adhesive coated nonwoven fabric.

The gas-permeability, heat seal strength and layer-peeling of the obtained water-based hot-melt adhesive coated nonwoven fabric were evaluated by the evaluation methods described hereinafter. The results were shown in Table 1.

### Example 4.

7.61 weight parts of styrene-butadiene-rubber latex (DL 326PA), 7.1 weight parts of ethylene acrylic acid copolymer dispersion (Michem^{®} Prime 4983-40R), 1.8 weight parts of rosin glyceride emulsion (Addtack^{™} 880 L), 3.76 weight parts of Fischer-Tropsch synthetic wax particles (Sasolwax Spray 30G-M), 3.76 weight parts of C9 petroleum resin micropowders (Cleartack^{®} W-90), 0.06 weight parts of surfactant (BYK-3450), 0.04 weight parts of defoamer (BYK-025) and 52 weight parts of deionized water were mixed and stirred for 1 hour for evenly dispersion to prepare a water-based hot-melt adhesive solution.

The obtained water-based hot-melt adhesive solution was coated on a high-density polyethylene spunbonded nonwoven fabric substrate Tyvek^{®} 2FS and dried to form a 10.7 g/m² water-based hot-melt adhesive coating layer on the high-density polyethylene spunbonded nonwoven fabric substrate to prepare a water-based hot-melt adhesive coated nonwoven fabric.

The gas-permeability, heat seal strength and layer-peeling of the obtained water-based hot-melt adhesive coated nonwoven fabric were evaluated by the evaluation methods described hereinafter. The results were shown in Table 1.

### Example 5.

7.61 weight parts of styrene-butadiene-rubber latex (DL 326PA), 7.1 weight parts of ethylene acrylic acid copolymer dispersion (Michem^{®} Prime 4983-40R), 1.8 weight parts of rosin ester emulsion (Addtack^{™} 880 L), 3.76 weight parts of Fischer-Tropsch synthetic wax particles (Sasolwax Spray 30G-M), 1.88 weight parts of C9 petroleum resin micropowders (Cleartack^{®} W-120), 1.88 weight parts of C5 petroleum resin micropowders (Wingtack^{®} 95), 0.04 weight parts of surfactant (BYK-3450), 0.04 weight parts of defoamer (BYK-025), 45.82 weight parts of deionized water and 2.18 weight parts of ethanol were mixed and stirred for 1 hour for evenly dispersion to prepare a water-based hot-melt adhesive solution.

The obtained water-based hot-melt adhesive solution was coated on a high-density polyethylene spunbonded nonwoven fabric substrate Tyvek^{®} 2FS and dried to form a 13.9 g/m² water-based hot-melt adhesive coating layer on the high-density polyethylene spunbonded nonwoven fabric substrate to prepare a water-based hot-melt adhesive coated nonwoven fabric.

The gas-permeability, heat seal strength and layer-peeling of the obtained water-based hot-melt adhesive coated nonwoven fabric were evaluated by the evaluation methods described hereinafter. The results were shown in Table 1.

### Example 6.

7.61 weight parts of styrene-butadiene-rubber latex (DL 326PA), 7.1 weight parts of ethylene acrylic acid copolymer dispersion (Michem^{®} Prime 4983-40R), 1.8 weight parts of rosin ester emulsion (Addtack^{™} 880 L), 3.76 weight parts of Fischer-Tropsch synthetic wax particles (Sasolwax Spray 30G-M), 1.88 weight parts of C9 petroleum resin micropowders (Cleartack^{®} W-120), 1.88 weight parts of C5/C9 petroleum resin micropowders (Wingtack^{®} EXTRA), 0.04 weight parts of surfactant (BYK-3450), 0.04 weight parts of defoamer (BYK-025), 45.82 weight parts of deionized water and 2.18 weight parts of ethanol were mixed and stirred for 1 hour for evenly dispersion to prepare a water-based hot-melt adhesive solution.

The obtained water-based hot-melt adhesive solution was coated on a high-density polyethylene spunbonded nonwoven fabric substrate Tyvek^{®} 2FS and dried to form a 15.9 g/m² water-based hot-melt adhesive coating layer on the high-density polyethylene spunbonded nonwoven fabric substrate to prepare a water-based hot-melt adhesive coated nonwoven fabric.

The gas-permeability, heat seal strength and layer-peeling of the obtained water-based hot-melt adhesive coated nonwoven fabric were evaluated by the evaluation methods described hereinafter. The results were shown in Table 1.

### Example 7.

7.2 weight parts of polyacrylic latex (Carbotac^{®} 1822), 7.1 weight parts of ethylene acrylic acid copolymer dispersion (Michem^{®} Prime 4983-40R), 1.8 weight parts of rosin ester emulsion (Addtack^{™} 880 L), 3.76 weight parts of Fischer-Tropsch synthetic wax particles (Sasolwax Spray 30G-M), 1.88 weight parts of C9 petroleum resin micropowders (Cleartack^{®} W-120), 1.88 weight parts of C9 petroleum resin micropowders (YL-90), 0.08 weight parts of surfactant (BYK-3450), 0.04 weight parts of defoamer (BYK-025), 45.82 weight parts of deionized water and 2.18 weight parts of ethanol were mixed and stirred for 1 hour for evenly dispersion to prepare a water-based hot-melt adhesive solution.

The obtained water-based hot-melt adhesive solution was coated on a high-density polyethylene spunbonded nonwoven fabric substrate Tyvek^{®} 2FS and dried to form a 16.4 g/m² water-based hot-melt adhesive coating layer on the high-density polyethylene spunbonded nonwoven fabric substrate to prepare a water-based hot-melt adhesive coated nonwoven fabric.

The gas-permeability, heat seal strength and layer-peeling of the obtained water-based hot-melt adhesive coated nonwoven fabric were evaluated by the evaluation methods described hereinafter. The results were shown in Table 1.

### Example 8.

6.56 weight parts of ethylene-vinyl acetate-acrylate copolymer dispersion (VINNAPAS^{®} EAF-68), 7.59 weight parts of ethylene acrylic acid copolymer dispersion (Michem^{®} Prime 4983-40R), 6.9 weight parts of rosin ester emulsion (Addtack^{™} 880 L), 5.04 weight parts of Fischer-Tropsch synthetic wax particles (Sasolwax Spray 30G-M), 2.48 weight parts of C9 petroleum resin micropowders (Cleartack^{®} W-140), 0.04 weight parts of wetting additive (TEGO^{®} Wet 240), 0.04 weight parts of defoamer (BYK-025) and 36.7 weight parts of deionized water were mixed and stirred for 1 hour for evenly dispersion to prepare a water-based hot-melt adhesive solution.

The obtained water-based hot-melt adhesive solution was coated on a high-density polyethylene spunbonded nonwoven fabric substrate Tyvek^{®} 2FS and dried to form a 17.3 g/m² water-based hot-melt adhesive coating layer on the high-density polyethylene spunbonded nonwoven fabric substrate to prepare a water-based hot-melt adhesive coated nonwoven fabric.

The gas-permeability, heat seal strength and layer-peeling of the obtained water-based hot-melt adhesive coated nonwoven fabric were evaluated by the evaluation methods described hereinafter. The results were shown in Table 1.

### Example 9.

9.18 weight parts of styrene-butadiene-styrene block copolymer latex (WB-24), 0.34 weight parts of ethylene-vinyl acetate-acrylate copolymer dispersion (VINNAPAS^{®} EAF-68), 5.1 weight parts of ethylene acrylic acid copolymer dispersion (Michem^{®} Prime 4983-40R), 5.1 weight parts of rosin ester emulsion (Addtack^{™} 880 L), 5.04 weight parts of Fischer-Tropsch synthetic wax particles (Sasolwax Spray 30G-M), 2.48 weight parts of C9 petroleum resin micropowders (Cleartack^{®} W-140), 0.04 weight parts of surfactant (TEGO^{®} Wet 240), 0.04 weight parts of defoamer (BYK-025) and 34.5 weight parts of deionized water were mixed and stirred for 1 hour for evenly dispersion to prepare a water-based hot-melt adhesive solution.

The obtained water-based hot-melt adhesive solution was coated on a high-density polyethylene spunbonded nonwoven fabric substrate Tyvek^{®} 2FS and dried to form a 17.5 g/m² water-based hot-melt adhesive coating layer on the high-density polyethylene spunbonded nonwoven fabric substrate to prepare a water-based hot-melt adhesive coated nonwoven fabric.

The gas-permeability, heat seal strength and layer-peeling of the obtained water-based hot-melt adhesive coated nonwoven fabric were evaluated by the evaluation methods described hereinafter. The results were shown in Table 1.

### Example 10.

5.12 weight parts of styrene-butadiene-styrene block copolymer latex (WB-24), 1.71 weight parts of ethylene-vinyl acetate-acrylate copolymer dispersion (VINNAPAS^{®} EAF-68), 3.84 weight parts of ethylene acrylic acid copolymer dispersion (Michem^{®} Prime 4983-40R), 1.86 weight parts of rosin ester emulsion (Addtack^{™} 880 L), 5.04 weight parts of Fischer-Tropsch synthetic wax particles (Sasolwax Spray 30G-M), 2.48 weight parts of C9 petroleum resin micropowders (Cleartack^{®} W-140), 0.036 weight parts of surfactant (TEGO^{®} Wet 240), 0.04 weight parts of defoamer (BYK-025) and 34.7 weight parts of deionized water were mixed and stirred for 1 hour for evenly dispersion to prepare a water-based hot-melt adhesive solution.

The obtained water-based hot-melt adhesive solution was coated on a high-density polyethylene spunbonded nonwoven fabric substrate Tyvek^{®} 2FS and dried to form a 14.1 g/m² water-based hot-melt adhesive coating layer on the high-density polyethylene spunbonded nonwoven fabric substrate to prepare a water-based hot-melt adhesive coated nonwoven fabric 100.

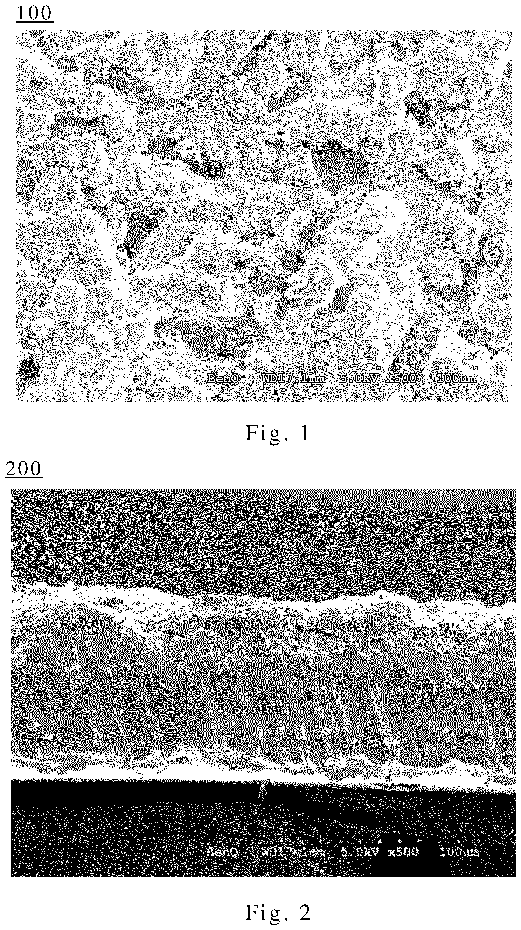

The scanning electron microscope (SEM) image of the obtained water-based hot-melt adhesive coated nonwoven fabric at 500 magnifications is shown in Fig. 1, which shows that the disclosed water-based hot-melt adhesive was coated on non-woven fabric to form a coating with voids. The gas-permeability, heat seal strength and layer-peeling of the obtained water-based hot-melt adhesive coated nonwoven fabric were evaluated by the evaluation methods described hereinafter. The results were shown in Table 1.

The coating amount, gas-permeability, heat seal strength, layer-peeling of the water-based hot-melt adhesive coated non-woven fabric were determined as below:

Coating amount: according to EN ISO 536 standard test, samples were obtained by the Sample Cutter 240/100 manufactured by Hans Schmidt & Co GmbH, Germany. The samples from the water-based hot-melt adhesive coated nonwoven fabric and the uncoated high-density polyethylene spunbonded nonwoven fabric substrate were weighted, respectively. The difference between the weights of the water-based hot-melt adhesive coated nonwoven fabric and the uncoated high-density polyethylene spunbonded nonwoven fabric substrate was the mass of coating amount per unit of area (g/m² (gsm)).

Gas-permeability: measure the average time required for 100 cubic centimeters of air to pass through the gas-permeable hot-melt sealing film according to the TAPPI T-460 standard by Gurley type Densometer Model 4980-D, manufactured by Lesson Industrial Co., Ltd, Taiwan.

Seal strength: laminate HDPE film, Teflon fabric and the obtained water-based hot-melt adhesive coated nonwoven fabric was heat press by Heat-sealing Machine BS-25 manufactured by Dah Bah Machinery Ind. Inc. Taiwan. The temperature of the top plate is set at 123°C, the temperature of the bottom plate is set at room temperature, the pressure of heat press is 1.5 Kg and the time is 1.5 second. Cut the heat sealed laminate to 15 mm wide strip sample. The sample was measured the maximum value of the tensile force as the seal strength according to the description of ASTM-88 by Tensile Strength Tester AI-3000 manufactured by Gotech Testing Machines Inc. Taiwan.

Layer-peeling evaluation: the HDPE film was peeled away from the water-based hot-melt adhesive coated nonwoven fabric by hand and observed if any fiber tear is occurred on the high-density polyethylene spunbonded nonwoven fabric substrate. If no fiber tear is observed on the substrate, the evaluation is O, and if fiber tear is observed, the evaluation is X.

**Table 1: The coating amount, gas-permeability, heat seal strength and layer-peeling of the water-based hot-melt adhesive coated nonwoven fabric obtained in Examples 1 to 10**

| Example | Coating amount (g/m²) | Gas-permeability (s) | Seal strength (gf/15mm) | Layer-peeling |
|---|---|---|---|---|
| Example 1 | 13.2 | 38 | 283 | O |
| Example 2 | 12.5 | 44 | 289 | O |
| Example 3 | 13.1 | 39 | 329 | O |
| Example 4 | 10.7 | 55 | 318 | O |
| Example 5 | 13.9 | 47 | 280 | O |
| Example 6 | 15.9 | 91 | 310 | O |
| Example 7 | 16.4 | 113 | 412 | O |
| Example 8 | 17.3 | 91 | 299 | O |
| Example 9 | 17.5 | 69 | 336 | O |
| Example 10 | 14.1 | 39 | 313 | O |

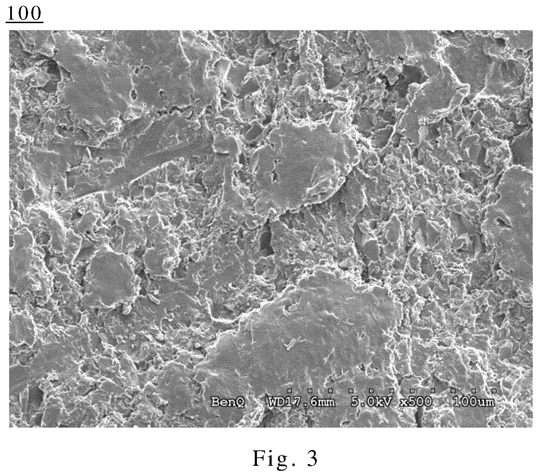

From Table 1, the water-based hot-melt adhesive coated nonwoven fabrics prepared by Examples 1 to 10 provided satisfied gas-permeability and seal strength after heat sealing with HDPE film. When the HDPE film was peeling away, no fiber tear was occurred on high-density polyethylene spunbonded nonwoven fabric substrate. For example, the layer-peeling of the water-based hot-melt adhesive coated nonwoven fabric 100 obtained from Example 10 was determined, the HDPE film 200 was peeled from the heat sealed packaging prepared by the water-based hot-melt adhesive coated non-woven fabric 100, the SEM images of the cross-section view of the HDPE film 200 and the top-surface view of the non-woven fabric 100 at 500 magnification as shown in Figs. 2 and Figs. 3 respectively. The images showed that the present water-based hot-melt adhesive coating was still covered the surfaces of the non-woven fabric 100 and the surface of the HDPE film 200 after the layer-peeling test, the layer-peeling was occurred at the middle of coating layer and no fiber tear was induced.

Although particular embodiments have been shown and described, it should be understood that the above discussion is not intended to limit the present disclosure to these embodiments. Persons skilled in the art will understand that various changes and modifications may be made without departing from the scope of the present disclosure as literally and equivalently covered by the following claims.

## Claims

1. A water-based hot-melt adhesive, comprising: 10 wt% to 35 wt% of water-based thermoplastic resin; 20 wt% to 45 wt% of wax particles; and 40 wt% to 60 wt% of tackifier; wherein the tackifier comprises emulsion tackifier and particulate tackifier, and wherein the total amount of the particles in the water-based hot-melt adhesive is 40 wt% to 65 wt% based on the total weight of the water-based hot-melt adhesive.

2. The water-based hot-melt adhesive as claimed in Claim 1, wherein the wax particles present in an amount of 40 wt% to 75 wt% based on the total weight of the particles and the particulate tackifier is present in an amount of 25 wt% to 60 wt% based on the total weight of the particles.

3. The water-based hot-melt adhesive as claimed in Claim 1, wherein the particle size of the wax particles is between 3 µm to 50 µm.

4. The water-based hot-melt adhesive as claimed in Claim 1, wherein the particle size of the particulate tackifier is between 3 µm to 50 µm.

5. The water-based hot-melt adhesive as claimed in Claim 1, wherein the glass transition temperature of the water-based hot-melt adhesive is between 0°C to -80°C.

6. The water-based hot-melt adhesive as claimed in Claim 1, wherein the glass transition temperature (Tg) of the wax particles is less than 0°C and the melting point thereof is between 70°C to 180°C and the wax particles are selected from the group consisting of Fischer-Tropsch synthetic wax particles, polypropylene wax particles, polyethylene wax particles, oxidized polyethylene wax particles and microcrystalline wax, or the combinations thereof.

7. The water-based hot-melt adhesive as claimed in Claim 1, wherein the emulsion tackifier is selected from the group consisting of petroleum resin emulsion, rosin ester emulsion and the derivatives thereof, terpene resin and the modified resin derivatives thereof, thermoplastic phenol-formaldehyde resin emulsion, low-molecular polystyrene emulsion and vinyl acrylate copolymer emulsion, or the combinations thereof; and the particulate tackifier is selected from the group consisting of C5 petroleum resin micropowders, C9 petroleum resin micropowders, C5/C9 copolymerized petroleum resin micropowders and hydrogenated C9 petroleum resin micropowders, or the combinations thereof.

8. The water-based hot-melt adhesive as claimed in Claim 1, wherein the particulate tackifier is present in an amount of 20 wt% to 65 wt% based on the total amount of the tackifier and, optionally, wherein the particulate tackifier comprises one or more particulate tackifiers.

9. The water-based hot-melt adhesive as claimed in Claim 1, wherein the emulsion tackifier is present in an amount of 35 wt% to 80 wt% based on the total amount of the tackifier and, optionally, wherein the emulsion tackifier comprises one or more emulsion tackifiers.

10. The water-based hot-melt adhesive as claimed in Claim 1, wherein the glass transition temperature of the water-based thermoplastic resin is less than 0°C and the melting point thereof is between 150°C to 300°C.

11. The water-based hot-melt adhesive as claimed in Claim 1, wherein the water-based thermoplastic resin is selected from the group consisting of ethylene-vinyl acetate, styrene-butadiene-rubber, styrene-butadiene-styrene block copolymer, styrene-acrylic acid copolymer, ethylene acrylic resin and polyacrylic resin, or the combinations thereof and, optionally, wherein the water-based thermoplastic resin comprises one or more water-based thermoplastic resins.

12. A water-based hot-melt adhesive, comprising: 13 wt% to 30 wt% of a water-based thermoplastic resin, 22 wt% to 40 wt% of a wax particle and 40 wt% to 55 wt% of tackifier, wherein the tackifier comprises an emulsion tackifier and a particulate tackifier, the total amount of the particles in the water-based hot-melt adhesive is 41 wt% to 61 wt% based on the total weight of the water-based hot-melt adhesive.

13. A water-based hot-melt adhesive coated nonwoven fabric comprising:
a polyolefin spunbonded nonwoven fabric substrate, and
a water-based hot-melt adhesive coating layer formed on at least one side of the polyolefin spunbonded nonwoven fabric,
wherein the water-based hot-melt adhesive coating layer comprises 10 wt% to 35 wt% of a water-based thermoplastic resin; 20 wt% to 45 wt% of a wax particle;
and 40 wt% to 60 wt% of a tackifier; wherein the tackifier comprises emulsion tackifier and particulate tackifier, and wherein the total amount of the particles in the water-based hot-melt adhesive is 40 wt% to 65 wt% based on the total weight of the water-based hot-melt adhesive.

14. The water-based hot-melt adhesive coated nonwoven fabric as claimed in Claim 13, wherein the gas-permeability of water-based hot-melt adhesive coated nonwoven fabric is less than 120 seconds and the seal strength thereof is more than 220 g/15 mm.

15. The water-based hot-melt adhesive coated nonwoven fabric as claimed in Claim 13, wherein the coating amount of the water-based hot-melt adhesive on the polyolefin spunbonded nonwoven fabric substrate is between 8 g/m² to 20 g/m².
